# EUROPEAN PATENT APPLICATION

(11) **EP 4 553 494 A1**
(43) Date of publication of application: **14.05.2025**
(21) Application number: 23383138.7
(22) Date of filing: 07.11.2023
(51) Int. Cl.: G01N 31/22, A41D 13/11

(54) **DEVICE FOR PROTECTION AGAINST BIOLOGICAL AGENTS WITH AN EXPIRATION INDICATOR SYSTEM**

(71) Applicant: Andalusi Beverages, S.L., 28003 Madrid (ES)
(72) Inventor: Rodríguez Fernández, Jose Antonio, Madrid (ES); Rodríguez Lucena, David, Madrid (ES); Roales Batanero, Javier, Madrid (ES); Pedrosa Poyato, José María, Madrid (ES)
(74) Representative: Pons

(57) **Abstract**

The present invention relates to a device for protection against biological agents with an expiration indicator system, specifically a face protection device, that visually indicates the end of the service life of the face protection device for protection against biological agents, hereinafter referred to as a mask.

## Description

The present invention relates to a device for protection against biological agents with an expiration indicator system, specifically a face protection device, that visually indicates the end of the service life of the face protection device for protection against biological agents, hereinafter referred to as a mask.

### BACKGROUND OF THE INVENTION

Air pollution is widely recognized as a major risk factor for public health worldwide, causing thousands of premature deaths every year in Europe, as well as cardiovascular and pulmonary diseases affecting millions of patients. The size of pollutants plays a determining role, since the smallest particles are the most likely to become airborne, and therefore to be more dangerous. In fact, particles larger than 10 µm generally collect in the upper part of the respiratory system and therefore cannot enter the deep part of the lungs. However, particles smaller than 10 µm can be breathed in, which means that they are capable of penetrating the deep part of the lungs. Those particles include, among others, bacteria, viruses, clay, silt, tobacco smoke, and metal fumes. The European Environment Agency (EEA) estimated that in 2018 there were 417,000 premature deaths attributable to particulate matter (PM) with a diameter <2.5 µm (PM2.5), with this size range being considered the most dangerous.

Moreover, the unexpected emergence of the coronavirus (COVID-19) has raised concerns about whether air pollution may increase disease severity and the risk of death after infection, as well as facilitate the spread of severe acute respiratory syndrome coronavirus 2 (SARS-CoV-2) or other pathogens of infectious respiratory diseases, such as tuberculosis and measles or influenza (H1N1 A).

The danger of airborne pollutants can be addressed by means of applying basic controls, such as increasing ventilation, providing suitable filtering means in rooms, or providing workers with protective equipment, such as protective masks.

Likewise, Protective masks have also been widely used by personnel in hospitals, researchers in laboratories, workers on construction sites, as well as the general public in highly polluted areas or during the flu season. They are made up of a filtering barrier, which is a critical component that determines the protection level of the mask, since filtration efficiency depends on particle size and air flow speed.

Since the 2019 pandemic, it has become increasingly common for users to use masks for long periods of time. This can lead to breathing difficulties and an increased sense of stuffiness and congestion, due to the buildup of carbon dioxide and moisture inside the mask. Furthermore, prolonged use over several hours at a time causes the same air to be recirculated over and over again, causing discomfort during breathing, favoring congestion and causing loss of filtration efficiency. At this point, it could be said that the mask has exhausted its minimum protection capacity. In fact, there are limited maximum times for using the different types of devices for protection against biological agents, such as masks, which, however, do not have up until now a system that visually indicates the end of their service life. Therefore, it is currently impossible for the user him/herself, and other people who come into contact with him/her, to know in an easy and direct manner when his/her device for protection against biological agents, such as a mask, has ceased to be useful and therefore must be discarded and replaced with a new one, with the corresponding health risks that this entails.

### DESCRIPTION OF THE INVENTION

A chemical reaction or mechanism that is modified during the time of use of the device for protection against biological agents, such as, for example, a mask, is described. The components that are part of the reaction will be contained in a type of specific compatible support that will later be adhered or included in the mask during the manufacturing process.

Briefly, the invention consists of a protection device with a visual indication system for indicating the time of exposure or use of the device, comprising both a facial protection device and an indicator for indicating the time of exposure or use of the device.

Said indicator for indicating the time of exposure or use of the device can be, for example, a support or substrate, as well as, for example, a device consisting of a breakable capsule that can be broken by means of pressure or bending inside a container.

In the case where it is a support, said support is preferably a solid substrate that exhibits capillarity, so that it can thus absorb the liquid containing the dye. Examples of a substrate can be paper, synthetic or natural fabric, non-woven fabric, or any other similar absorbent material.

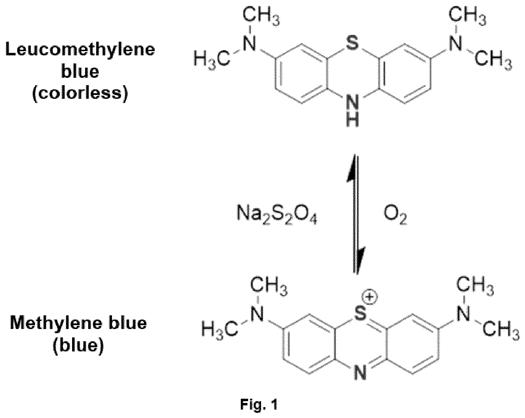

The dye is a compound which acts as a redox indicator which changes color depending on whether it is in its oxidized or reduced state. In the present invention, the dye is methylene blue and indigo carmine, wherein both dyes are water soluble. The dye is subjected to a chemical reduction process with a reducing compound capable of reducing the dye, for example, methylene blue. The reducing compound can be ascorbic acid, glucose, sodium dithionite (Na2S2O4), or others. The reducing compound can be found in a medium at any pH, necessarily being in a basic medium when the dye comprises indigo for the reduction reaction. In these conditions, the dye changes from its characteristic color in the oxidized state to its colorless form in the reduced state for methylene blue and to yellow color for indigo carmine, wherein the oxidized and reduced forms thereof are completely water soluble (Figure 1). From this point, the time of color change is modulated by means of using the so-called "sacrificial reagent", which is nothing more than an excess of the reducing compound (for example: sodium dithionite) which is gradually consumed as oxygen enters, maintaining the colorless state during the use of the device, until it runs out and color change begins, indicating the end of the time for using the mask.

In a first aspect, the present invention relates to a protection device with a visual indication system for indicating exposure time and loss of effectiveness comprising
- a face protection device comprising two faces, a first inner face configured to be in contact with the skin of a subject using the face protection device; and a second outer face configured to be in contact with the air; and
- an indicator for indicating exposure time through color change, characterized in that it is adhered by means of a system selected from an adhesive, heat sealing, and ultrasonic sealing, on the second face of the face protection device, and comprising a dye selected from methylene blue and indigo carmine, and at least one reducing compound selected from sodium dithionite, ascorbic acid, or glucose, the composition being characterized in that it contains a mass ratio between methylene blue and the reducing compound of between 1:0.4 and 1:10.

In a preferred embodiment of the invention, the indicator for indicating exposure time through color change is a paper or cellulose substrate impregnated with an aqueous solution comprising a dye selected from methylene blue and indigo carmine, and at least one reducing compound. In a more preferred embodiment, said cellulose paper substrate is also located inside a container semipermeable to oxygen, or inside a high-oxygen barrier plastic laminate, preferably a three-layer PETALOX/OPA/PP laminate, wherein the first layer is PET (polyethylene terephthalate) coated with AlOx (aluminum oxide), the second layer is OPA (nylon polyamide), and the third layer is PP (polypropylene) configured to be broken, torn, opened, or removed.

This impregnated substrate can also act as an indicator for indicating exposure time through color change, for example, adhered to a face protection device, specifically on the second face of the face protection device, which helps to know the time of use of said face protection device, and when said face protection device has reached its expiration or service life.

The substrate to impregnate can be paper, synthetic or natural fabric, non-woven fabric, or any other similar absorbent material that exhibits capillarity to absorb the solution and contain the dye, preferably being cellulose or paper.

The impregnation of the substrate will be performed by adding a solution (preferably aqueous) comprising at least the dye in its reduced state (leucomethylene blue, colorless) and the reducing compound (for example: sodium dithionite), on the surface of the substrate, such that the substrate (preferably paper or cellulose) is impregnated with same. Lastly, the substrate is left to dry such that the solution evaporates and the paper is impregnated with the composition indicating the expiration of the substrate or device that consists of at least the dye and the reducing compound. When this impregnated substrate is used as a device for protection against biological agents and comes into contact with oxygen in the air, the methylene blue (blue in color) impregnated thereon will oxidize, which will indicate that the protection device has reached the end of its service life.

During the impregnation of the substrate, the reduction and impregnation processes will preferably be performed in an oxygen-free atmosphere to prevent it from reacting with the dye or the reducing compound. This process can be performed in a sealed receptacle filled with N2, CO2, or any other inert gas. After impregnation with the reduced dye (leucomethylene blue) and the reducing agent (for example, sodium dithionite), preferably with a certain excess of reducing compound to modulate the duration of the device, the substrate is left to dry in the absence of oxygen before the use thereof for manufacturing the indicator for indicating exposure time through color change, or the device for protection against biological agents.

The method for manufacturing the impregnated substrate comprises at least the steps of:
a. impregnating the substrate with an aqueous solution comprising methylene blue and sodium dithionite with a mass ratio of between 1:0.7 and 1:10; and
b. drying the impregnated substrate in the absence of oxygen.

In another preferred embodiment of the invention, the indicator for indicating exposure time through color change consists of a container semipermeable to oxygen comprising therein an aqueous solution, a dye selected from methylene blue and indigo carmine, and at least one reducing compound, or the paper or cellulose substrate impregnated with the aqueous solution consisting of methylene blue or indigo carmine and at least one reducing compound. As a non-limiting example, the container semipermeable to oxygen can have a surface measuring 0.5 to 5 cm by 0.5 to 5 cm, and the container may comprise 0.1 mL to 3 mL of water or aqueous solution, with methylene blue and at least one reducing compound.

In another preferred embodiment, the container semipermeable to oxygen is made of an ultrasonic sealable polymer. More preferably, the ultrasonic sealable polymer is selected from polypropylene, polyethylene, PVC, polyamide, cellulose acetate, and any combination of the foregoing.

In another preferred embodiment, the container semipermeable to oxygen is made of a heat-sealable polymer o an ultrasonic sealable polymer, wherein said heat-sealable polymer or ultrasonic-sealable polymer is selected from polypropylene, polyethylene, PVC, polyamide, cellulose acetate, and any combination of the foregoing.

In another even more preferred embodiment, the thickness of the container made of heat-sealable polymer is between 40 µm and 100 µm. Furthermore, even more preferably, it is between 50 µm and 90 µm.

In another preferred embodiment, the size of the surface of the container is 2.5 cm to 3.5 cm by 2.5 cm to 3.5 cm.

In another preferred embodiment, the adhesive is selected from epoxy resin, cyanoacrylate, polyurethane, silicone, acrylic, phenolic, polyimide, vinyl, neoprene adhesives, and any combination of the foregoing.

In another even more preferred embodiment of the invention, the indicator for indicating exposure time through color change is a device consisting of at least one breakable capsule that can be broken by means of pressure or bending, comprising a dye selected from methylene blue and indigo carmine, and at least one reducing compound, located inside a container semipermeable to oxygen that contains water or an aqueous solution therein. Optionally, the container can also be permeable to oxygen or impermeable to oxygen.

In another even more preferred embodiment of the invention, the indicator for indicating exposure time through color change is a device comprising at least one breakable capsule that can be broken by means of pressure or bending, which comprises the aqueous solution therein, and which is located inside a container semipermeable to oxygen which comprises methylene blue or indigo carmine and at least one reducing compound therein. According to this embodiment, the indicator for indicating exposure time through color change is a device consisting of at least one breakable capsule that can be broken by means of pressure or bending, which contains the aqueous solution therein, located inside a container semipermeable to oxygen which comprises a dye selected from methylene blue and indigo carmine, and at least one reducing compound therein.

The breakable capsule can be made of any material that can be broken under pressure, such as, for example, glass, ceramic, or hard plastic. The breakable capsule can be manufactured from any sealable material that is impermeable to water and oxygen and can be broken by means of pressure or bending. The capsule can be made of glass, ceramic, or any plastic material that can be broken such as polypropylene, polycarbonate, or methacrylate, without being limited thereto. Preferably, the capsule will be a glass capsule. The breakable capsule can be sealed by heat, melting the glass or plastic, either by means of a cap or adhesive or a combination thereof. The breakable capsule can be broken by means of pressure or by means of bending the flexible container, which will cause the solid reagents to come into contact with water and dissolve, leading to the occurrence of the dye reduction reaction.

Said devices with a breakable capsule have the advantages that, by placing the expiration indicator close to an area where the mask is in contact with the skin, body temperature helps to minimize the effect of external temperature for temporary exposures. Given that the reagents are completely isolated by the container semipermeable to oxygen and that they are in a small amount, they do not pose a risk to whoever uses the device. The mass ratio between methylene blue and sodium dithionite of 1:0.6 is equivalent to 1.1 equivalents of dithionite, and it is the minimum required to reduce all the methylene blue and to cause it to change color to its colorless state (leucomethylene blue). With a mass ratio of 1:1.4, an excess of reducing agent is included which functions as a sacrificial reagent so that, once the mask is exposed to air, the estimated time to oxidize all leucomethylene blue to methylene blue, and thus change color to its original blue, is 4 h. The mass ratio between indigo carmine and sodium dithionite of 1:0.4 is equivalent to 1.1 equivalents of dithionite, and it is the minimum required to reduce all the indigo carmine and to cause it to change color to its colorless state. With a mass ratio of 1:0.95, an excess of reducing agent is included which functions as a sacrificial reagent so that, once the mask is exposed to air, the estimated time to oxidize all the indigo carmine, and thus change color to its original blue, is 4 h.

In the present invention, "air" is understood as the transparent, odorless and tasteless gaseous substance that surrounds the Earth and forms the atmosphere; it is made up mainly of oxygen and nitrogen, and by varying amounts of argon, water vapor and carbon dioxide and which may comprise bacteria, viruses, clay, silt, smokes, and metal fumes.

In another preferred embodiment, the mass ratio of methylene blue to sodium dithionite is 1:1. With a mass ratio of 1:1, the estimated time to oxidize all the methylene blue and for color change to occur is a time of 4 h. Said value coincides with the recommended time of use of some face protectors.

In another preferred embodiment, the mass ratio of methylene blue to sodium dithionite is 1:1.5. With a mass ratio of 1:1.5, the estimated time to oxidize all the indigo and for color change to occur is a time of 8 h. Said value coincides with the recommended time of use of different long-lasting face protectors.

In another preferred embodiment, the face protection device is selected from a 1-ply surgical mask, 3-ply surgical mask, N95 mask, KN95 mask, KF94 mask, FFP1 mask, FFP2 mask with and without exhalation valve, FFP3 mask with and without exhalation valve.

In another more preferred embodiment, the face protection device is a 3-ply surgical mask, and wherein the indicator for indicating exposure time through color change comprises a polypropylene container with a surface measuring 3 cm x 2.5 cm, adhered by means of an adhesive on the second face of the mask, and comprising 0.4 ml of an aqueous solution which contains 1.5 mg of methylene blue, 0.9 mg of sodium dithionite, or 0.4 ml of an aqueous solution which contains 1.5 mg of indigo carmine, 0.6 of sodium dithionite.

In another more preferred embodiment, the face protection device is an FFP2 mask without exhalation valve, and wherein the indicator for indicating exposure time through color change comprises a polypropylene container with a surface measuring 3 cm x 3 cm, adhered by means of an adhesive on the second face of the mask, and comprising 0.5 ml of an aqueous solution which contains 1.9 mg of methylene blue, 1.2 mg of sodium dithionite, or 0.5 ml of an aqueous solution which contains 1.9 mg of indigo carmine, 0.8 of sodium dithionite.

In another preferred embodiment, the indicator device further comprises isolating means, preferably hermetic and impermeable to oxygen, adjacent to the expiration indicator device and surrounding said indicator device completely, and wherein said means are configured to be eliminated, removed, and/or broken. In a more preferred embodiment, the hermetic and impermeable isolating means is a nylon bag with a thickness of at least 0.24 mm.

Any of the devices according to any of the aspects of the invention (for example, the now dry impregnated substrate, or the device comprising said now dry substrate) can be stored in a sealed receptacle that prevents the entry of oxygen, until the use of the substrate or device.

This receptacle is preferably readily breakable by the user, and can be made using high-oxygen barrier plastic laminates. Laminates of this type are known in the state of the art, and may include a layer of aluminum or silicon oxide, or laminates containing an aluminum film, in order to be even more effective as an oxygen barrier. These laminates can be sealed by means of adhesives, heat sealing, or ultrasonic sealing. The receptacle is preferably a high barrier plastic laminate, for example, a multilayer laminate which is a combination of at least 2 layers selected from PET (polyethylene terephthalate), ALOX (aluminum oxide), OPA (nylon polyamide), or PP (polypropylene); wherein at least one of the layers prevents the entry of oxygen, with this being at least one layer of metal oxide such as ALOX (aluminum oxide) or a similar material.

Furthermore, the receptacle in which the dry impregnated substrate is stored, or any of the devices or indicators for indicating exposure time according to the invention, may also include oxygen and/or moisture absorbers. These absorbers can also be added, for example, to the impregnated substrate, or to devices against biological agents produced from said substrate, or to the indicators for indicating exposure time according to the invention.

Oxygen absorbers lead to the absorption of oxygen possibly entering due to poor sealing or residual permeability of the barrier, with the non-limiting examples thereof being: iron powder, ascorbic acid, catechol, sulfite, metal salts, or the combinations thereof.

Moisture absorbers ensure a dry environment, making it difficult for an eventual reaction to occur between the reduced dye and possible traces of oxygen, with the non-limiting examples thereof being silica gel, activated carbon, sodium chloride, calcium salts such as calcium sulfate or calcium chloride, zeolites, or the combinations thereof.

In a preferred embodiment, the oxygen absorber is iron powder to which sodium chloride is added to accelerate the reaction and the moisture absorber is silica gel.

For any of the previously described devices of the invention, the advantage of using methylene blue or indigo carmine as a dye (in contrast to the use of other dyes such as, for example, indigo) is that the activation of the initial reduction reaction (for example, the reduction reaction of methylene blue to leucomethylene blue) is immediate as soon as this reagent comes into contact with the reducing compound, given that for these compounds, both the compound in oxidized form and the compound in reduced form are completely water soluble. To that end, the color change during the activation of the dye (from blue to colorless) starts to occur instantly as soon as the required use of the device for protection against biological agents is made. Therefore, both the start of use of the device and its service life are instantly marked by means of the color change from methylene blue to the colorless leucomethylene blue, which provides greater precision and reliability of the exact time of use of the device, as well as the exact time in which the device reaches the end of its service life. By contrast, the use of other dyes of the state of the art is less precise and reliable, since it has been observed that the use thereof in devices of this type exhibits a time delay between the start of use of the device and the color change, so the estimation of the start time of use of the device, the time of use of the device, and the time the device reaches the end of its service life, using these other alternative dyes, is less precise and reliable. By way of example, an activation time delay (from the initial reduction reaction) of about 15-30 minutes is observed when the alternative indigo dye is used, in contrast to methylene blue which does not exhibit this time delay as a dye according to the present invention.

Other advantages of using methylene blue or indigo carmine as dyes in the devices or indicators for indicating time according to the invention (compared to other dyes of the state of the art), is that it does not need an alkaline medium to react, and also that it is completely water soluble both in its oxidized form (methylene blue) and in its reduced form (leucomethylene blue), so it is activated sooner and also does not produce precipitates during oxidation. Other dyes, such as indigo, are not soluble in the oxidized state, delaying their activation and producing a precipitate at the end of the reaction that makes it difficult to identify the color of the devices.

A second aspect of the invention relates to a kit characterized in that it comprises
i. a hermetic oxygen-impermeable receptacle configured to be eliminated and/or broken, wherein said receptacle is a high-oxygen barrier plastic laminate; and
ii. the protection device with a visual indication system inside the hermetic receptacle, characterized in that it comprises
   - a face protection device comprising two faces, a first inner face configured to be in contact with the skin of a subject using the face protection device; and a second outer face configured to be in contact with the air; and
   - an indicator for indicating exposure time through color change, characterized in that it is adhered by means of a system selected from an adhesive, heat sealing, and ultrasonic sealing, on the second face of the face protection device, and comprising a composition which comprises an aqueous solution consisting of a dye selected from methylene blue, indigo blue, indigo red, and at least one reducing compound selected from sodium dithionite, ascorbic acid, or glucose, the composition being characterized in that it contains a mass ratio between the dye and the reducing compound of between 1:0.4 and 1:10.

In a preferred embodiment of the kit, wherein the high-oxygen barrier plastic laminate hermetic receptacle is a three-layer laminate of PET ALOX/OPA/PP, wherein the first layer is PET (polyethylene terephthalate) coated with AlOx (aluminum oxide), the second layer is OPA (nylon polyamide), and the third layer is PP (polypropylene).

In another more preferred embodiment of the kit, the visual indicator further comprises a solid support substrate which comprises the dye and the reducing agent absorbed in the entire volume thereof, wherein said solid is selected from absorbent paper, synthetic fabric, preferably selected from polyester, acrylic or the like; or is natural, preferably selected from cotton, flax, hemp, or the like; non-woven fabric, preferably from polypropylene, PET, cotton, cellulose, or others with similar characteristics; or any other similar absorbent material, and wherein if said solid support exists, the dye is selected from methylene blue, indigo carmine, or indigo.

In another more preferred embodiment of the kit, the hermetic receptacle of the kit incorporates moisture absorbers and/or oxygen absorbers.

It should be noted that this hermetic receptacle that the kit comprises refers to a holder that is different from that of the container inside which the capsule is placed according to the fourth or fifth aspect of the invention. Therefore, in order to differentiate both holders, the term "receptacle" has been used throughout the description for the holder of the kit, while the term "container" has been used for the holder containing the capsule.

In another preferred embodiment of the kit, when the dye comprises indigo, the pH of the aqueous solution is between 10 and 12, even more preferably pH 11. The advantage of said pH range is that the solution is as non-caustic as possible and therefore less dangerous both for the container semipermeable to oxygen and for the user who uses the protection system.

In another preferred embodiment of the kit, the basic aqueous solution is selected from a solution comprising NaOH, KOH, RbOH, CsOH, Be(OH)₂, Mg(OH)₂, Ca(OH)₂, and any combination of the foregoing.

In another preferred embodiment of the kit, the basic aqueous solution is NaOH and the pH is 10.5 to 11.5, preferably the pH is 11.

In another preferred embodiment of the kit, the indicator for indicating exposure time through color change consists of a container semipermeable to oxygen comprising therein an aqueous solution, methylene blue, indigo carmine and indigo blue and at least one reducing compound, or the paper or cellulose substrate impregnated with the aqueous solution consisting of methylene blue, indigo carmine and indigo blue and at least one reducing compound. As a non-limiting example, the container semipermeable to oxygen can have a surface measuring 0.5 to 5 cm by 0.5 to 5 cm, and the container may comprise 0.1 mL to 3 mL of water or aqueous solution, with methylene blue and at least one reducing compound.

In another preferred embodiment of the kit, the container semipermeable to oxygen is made of an ultrasonic sealable polymer. More preferably, the ultrasonic sealable polymer is selected from polypropylene, polyethylene, PVC, polyamide, cellulose acetate, and any combination of the foregoing.

In another preferred embodiment of the kit, the container semipermeable to oxygen is made of a heat-sealable polymer or an ultrasonic sealable polymer, wherein said heat-sealable polymer or ultrasonic-sealable polymer is selected from polypropylene, polyethylene, PVC, polyamide, cellulose acetate, and any combination of the foregoing.

In another even more preferred embodiment of the kit, the thickness of the container made of heat-sealable polymer is between 40 µm and 100 µm. Furthermore, even more preferably, it is between 50 µm and 90 µm.

In another preferred embodiment of the kit, the size of the surface of the container is 2.5 cm to 3.5 cm by 2.5 cm to 3.5 cm.

In another preferred embodiment of the kit, the adhesive is selected from epoxy resin, cyanoacrylate, polyurethane, silicone, acrylic, phenolic, polyimide, vinyl, neoprene adhesives, and any combination of the foregoing.

In another even more preferred embodiment of the kit, the indicator for indicating exposure time through color change is a device consisting of at least one breakable capsule that can be broken by means of pressure or bending, comprising methylene blue, indigo carmine and indigo blue and the at least one reducing compound, located inside a container semipermeable to oxygen that contains water or an aqueous solution therein. Optionally, the container can also be permeable to oxygen or impermeable to oxygen.

In another even more preferred embodiment of the kit, the indicator for indicating exposure time through color change is a device comprising at least one breakable capsule that can be broken by means of pressure or bending, which comprises the aqueous solution therein, and is located inside a container semipermeable to oxygen which comprises methylene blue, indigo carmine and indigo blue and at least one reducing compound therein. According to this embodiment, the indicator for indicating exposure time through color change is a device consisting of at least one breakable capsule that can be broken by means of pressure or bending, which contains the aqueous solution therein, located inside a container semipermeable to oxygen which comprises methylene blue, indigo carmine, and indigo blue and at least one reducing compound therein.

The breakable capsule can be made of any material that can be broken under pressure, such as, for example, glass, ceramic, or hard plastic. The breakable capsule can be manufactured from any sealable material that is impermeable to water and oxygen and can be broken by means of pressure or bending. The capsule can be made of glass, ceramic, or any plastic material that can be broken such as polypropylene, polycarbonate, or methacrylate, without being limited thereto. Preferably, the capsule will be a glass capsule. The breakable capsule can be sealed by heat, melting the glass or plastic, either by means of a cap or adhesive or a combination thereof. The breakable capsule can be broken by means of pressure or by means of bending the flexible container, which will cause the solid reagents to come into contact with water and dissolve, leading to the occurrence of the dye reduction reaction.

Said devices with a breakable capsule have the advantages that, by placing the expiration indicator close to an area where the mask is in contact with the skin, body temperature helps to minimize the effect of external temperature for temporary exposures. Given that the reagents are completely isolated by the container semipermeable to oxygen and that they are in a small amount, they do not pose a risk to whoever uses the device. The mass ratio between methylene blue and sodium dithionite of 1:0.6 is equivalent to 1.1 equivalents of dithionite, and it is the minimum required to reduce all the methylene blue and to cause it to change color to its colorless state (leucomethylene blue). With a mass ratio of 1 :1.4, an excess of sacrificial reagent is included so that, once the mask is exposed to air, the estimated time to oxidize all leucomethylene blue to methylene blue, and thus change color to its original blue, is 4 h. The mass ratio between indigo carmine and sodium dithionite of 1:0.4 is equivalent to 1.1 equivalents of dithionite, and it is the minimum required to reduce all the indigo carmine and to cause it to change color to its colorless state. With a mass ratio of 1:0.95, an excess of sacrificial reagent is included so that, once the mask is exposed to air, the estimated time to oxidize all the indigo carmine, and thus change color to its original blue, is 4 h.

The advantage of using methylene blue or indigo carmine as a dye in the kit (in contrast to the use of other dyes such as, for example, indigo) is that the activation of the initial reduction reaction (for example, the reduction reaction of methylene blue to leucomethylene blue) is immediate as soon as this reagent comes into contact with the reducing compound, given that for these compounds, both the compound in oxidized form and the compound in reduced form are completely water soluble. To that end, the color change (from preactivated blue to colorless) starts to occur instantly as soon as the required use of the device for protection against biological agents is made (in an inert atmosphere). Therefore, the start of use of the device is instantly marked by means of the color change from methylene blue to the colorless leucomethylene blue, which provides greater precision and reliability of the exact time of use of the device, as well as the exact time in which the device reaches the end of its service life. By contrast, the use of other dyes of the state of the art is less precise and reliable, since it has been observed that the use thereof in devices of this type exhibits a time delay between the start of use of the device and the color change, so the estimation of the start time of use of the device, the time of use of the device, and the time the device reaches the end of its service life, using these other alternative dyes, is less precise and reliable. By way of example, an activation time delay (from the initial reduction reaction) of about 15-30 minutes is observed when the alternative indigo dye is used, in contrast to methylene blue which does not exhibit this time delay as a dye according to the present invention.

Other advantages of using methylene blue or indigo carmine as dyes in the devices or indicators for indicating time according to the invention (compared to other dyes of the state of the art), is that it does not need an alkaline medium to react, and also that it is completely water soluble both in its oxidized form (methylene blue) and in its reduced form (leucomethylene blue), so it is activated sooner and also does not produce precipitates during oxidation. Other dyes, such as indigo, are not soluble in the oxidized state, delaying their activation and producing a precipitate at the end of the reaction that makes it difficult to identify the color of the devices.

Throughout the description and the claims, the word "comprises" and its variants do not intend to exclude other technical features, additives, components or steps. Forthose skilled in the art, other objects, advantages and features of the invention may be partially deduced from both the description and the embodiment of the invention. The following examples and figures are provided by way of illustration and are not intended to limit the present invention.

### BRIEF DESCRIPTION OF THE FIGURES

**Fig. 1****.** Reactions involved in the transformation of leucomethylene blue (colorless) into methylene blue (blue).

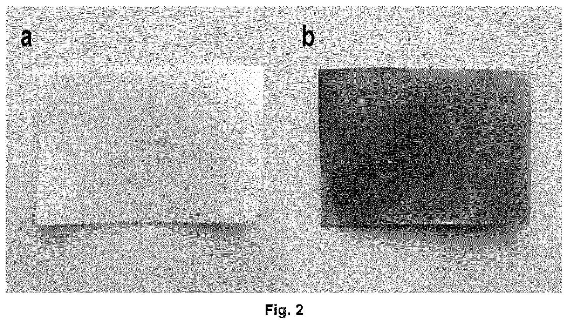

**Fig. 2****.** Substrate (absorbent paper) impregnated with methylene blue reduced with sodium dithionite in basic medium. a) Initial state of the impregnated absorbent paper (with white color); b) Oxidized state of the impregnated absorbent paper (with blue color), after 5 hours of exposure to ambient oxygen.

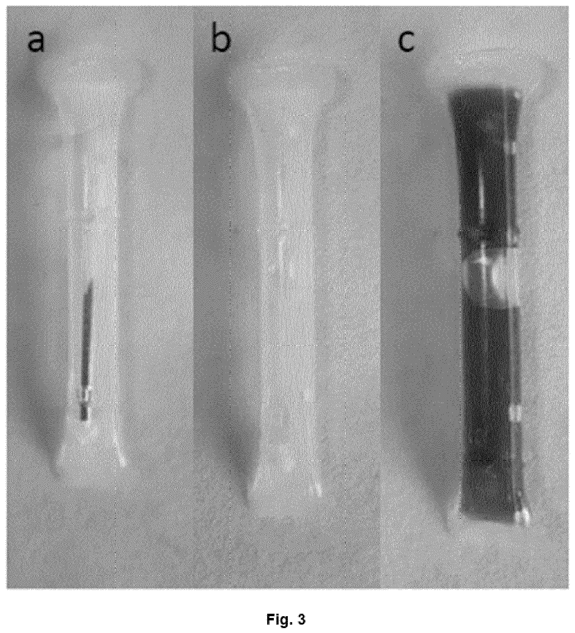

**Fig. 3****.** Plastic (polyethylene) container semipermeable to oxygen which contains water therein, and a sealed glass capsule which contains methylene blue, sodium dithionite, and sodium chloride. (a) State before the activation of the device (the water above has a transparent color and the contents of the glass capsule with methylene blue are blue, sodium dithionite, and sodium chloride). b) Activated state of the device (it has a transparent color), in which once the inner capsule has been broken, the reagents have been mixed with water, and methylene blue has been reduced by the action of sodium dithionite. c) Final state of the device, in which methylene blue has been oxidized by the diffusion of oxygen through the semipermeable plastic (with blue color).

### EXAMPLES

Next, the invention will be illustrated by means of assays carried out by the inventors, which demonstrate the effectiveness of the product of the invention.

### Example 1

This example refers to a 60-micrometer thick AG194 polypropylene (Avery Dennison) container semipermeable oxygen with a surface measuring 3 cm x 2.5 cm glued onto a surgical mask, comprising therein 1.5 mg of methylene blue (Sigma-Aldrich), 0.9 mg of sodium dithionite (Sigma-Aldrich), and 0.4 ml of water. To prevent errors caused by manual device preparation, a sample of 5 devices prepared with this set of instructions was used, obtaining an average start of color change at 1 h and resulting in a darkening to definitive blue in 4 h.

### Example 2

This example refers to a 60-micrometer thick AG194 polypropylene (Avery Dennison) container semipermeable oxygen with a surface measuring 3 cm x 3 cm glued onto a FFP2 mask, comprising therein 1.9 mg of methylene blue (Sigma-Aldrich), 1.2 mg of sodium dithionite (Sigma-Aldrich), and 0.5 ml of water. To prevent errors caused by manual device preparation, a sample of 6 devices prepared with this set of instructions was used, obtaining an average start of color change at 1 h and resulting in a darkening to definitive blue in 4 h.

### Example 3. Impregnation of a substrate with methylene blue (dye) in a reduced state.

A preferred preparation includes:
Impregnate Takipore TK-75 laboratory absorbent paper (density 75 g/m²) with 1.2 mg of methylene blue as dye and 3 mg of sodium dithionite as reducing compound (mass ratio of methylene blue:sodium dithionite of 1:25; molar ratio of methylene blue:sodium dithionite of 1 :4.5). At this time, an excess of sodium dithionite is present to prevent oxidation of the dye during the manufacture and packaging of the impregnated absorbent paper.

To that end, a vial containing 1.2 mg of methylene blue and 3 mg of sodium dithionite is introduced into a receptacle from which all oxygen was previously purged by means of purging with CO₂, where the Takipore TK-75 laboratory absorbent paper, which will act as a support, is also introduced. Once all the oxygen has been removed from the receptacle, 1 ml of water is added to the vial to dissolve the reagents. This can be done from the outside, for example, by introducing water with a syringe through a rubber septum that closes the receptacle, or from the inside in the case of using a glove box-type receptacle. As the reactants dissolve, the dye will be reduced and the solution will take on a colorless hue, since the reduced form of the dye is colorless leucomethylene blue.

The impregnation of the substrate (paper) with the reduced dye is done by taking a small volume of solution with a syringe and depositing it on the paper so that it absorbs the solution, leaving a transparent or slightly yellowish color with methylene blue or a yellowish color with indigo carmine. Once this is done, the paper is dried under a stream of CO₂. The process can be accelerated by means of moderate heating.

Once dry, the paper impregnated with reduced dye (Figure 2a) is introduced into a high-oxygen barrier holder made up of a laminate containing, among others, a layer of aluminum oxide to prevent the passage of oxygen and a layer of polypropylene therein to enable heat sealing (specifically a three-layer PET:ALOX/OPA:STE/PP holder, with layers having a thickness 12, 15, and 70 micrometers, respectively). The impregnated paper is introduced into the previously prepared holder, a vacuum is created, and the edge is subjected to heat sealing or ultrasonic sealing.

The device is kept in storage until the holder breaks and comes into contact with ambient oxygen, which will cause the dye to oxidize and its color to gradually change to dark blue (Figure 2b) within a period of about 5 h, depending on the amount of sodium dithionite remaining in the impregnated paper. This amount is determined by the possible presence of oxygen during the manufacturing and packaging process.

### Example 4. Breakable capsule with solid reagents, including methylene blue (dye) in a reduced state.

The example comprises:
- A breakable cylindrical glass capsule (length 3 cm, outer diameter 1.2 mm) containing 0.3 mg of methylene blue and 0.42 mg of sodium dithionite (mass ratio of 1 :1.4; or molar ratio of 1:2.6)
- A cylindrical polyethylene outer container (length 5 cm, outer diameter 5 mm, thickness 0.4 mm), containing 0.3 mL of water.

For its preparation, first, the glass capsule is sealed at one end by means of heat melting. There are introduced therein 0.3 mg of methylene blue and 0.42 mg of sodium dithionite, and sodium chloride as an inert excipient to facilitate weighing and handling. Therefore, the capsule is filled with 6 mg of a mixture containing 5% methylene blue, 7% sodium dithionite, and 88% sodium chloride. The open end is sealed by melting the glass with heat. The capsule is introduced into the polyethylene container with a heat-sealed end. The remaining inner volume is filled with water and the open end is heat-sealed. The resulting device can be seen in Figure 3a.

At this point, the device (breakable capsule with solid reagents inside a container with water) is ready for storage or use. When it is time to use the device, the user activates the device by pressing or bending the device until the inner capsule breaks. After breaking in several places and shaking to mix the reagents, the dye reduction occurs quickly. At this point, the solution will comprise leucomethylene blue and will therefore become colorless (Figure 3b). Sodium dithionite will react with the residual oxygen remaining in the device and subsequently with the oxygen that diffuses through the polyethylene container. When the reducing compound runs out, the dye will begin to react with oxygen and will turn blue gradually. The device will have reached the end of its service life when it is dark blue in color, which will occur after about 4 h, depending on the ambient temperature (Figure 3c).

## Claims

1. A protection device with a visual indication system for indicating exposure time and loss of effectiveness comprising
• a face protection device comprising two faces, a first inner face configured to be in contact with the skin of a subject using the face protection device; and a second outer face configured to be in contact with the air; and
• an indicator for indicating exposure time through color change, **characterized in that** it is adhered by means of a system selected from an adhesive, heat sealing, and ultrasonic sealing, on the second face of the face protection device, and wherein the indicator comprises a dye selected from methylene blue, indigo carmine, and at least one reducing compound selected from sodium dithionite, ascorbic acid, and glucose, wherein the mass ratio between the dye and the reducing compound is between 1:0.4 and 1:10.

2. The device according to claim 1, wherein the indicator for indicating exposure time through color change is a paper or cellulose substrate impregnated with an aqueous solution consisting of a dye and at least one reducing compound.

3. The device according to any of claims 1 or 2, wherein the indicator for indicating exposure time through color change comprises a container semipermeable to oxygen, wherein the container comprises an aqueous solution, the dye, and at least one reducing compound, or the paper or cellulose substrate impregnated with an aqueous solution consisting of a dye and at least one reducing compound.

4. The device according to claim 3, wherein the container semipermeable to oxygen is adhered by means of an adhesive selected from epoxy resin, cyanoacrylate, polyurethane, silicone, acrylic, phenolic, polyimide, vinyl, neoprene adhesives, and any combination of the foregoing.

5. The device according to claim 3, wherein the container semipermeable to oxygen is adhered by means of a heat sealing or ultrasonic sealing system through a heat-sealable polymer or an ultrasonic-sealable polymer, respectively, wherein the heat-sealable polymer or ultrasonic-sealable polymer is selected from polypropylene, polyamide PVC, cellulose acetate, and any of the combinations thereof.

6. The device according to any of claims 3 to 5, wherein the thickness of the container is between 40 µm and 100 µm, preferably the thickness is between 50 µm and 90 µm.

7. The device according to any of claims 3 to 6, wherein the size of the surface of the container is 2.5 cm to 3.5 cm by 2.5 cm to 3.5 cm.

8. The device according to any of claims 3 to 7, wherein the indicator for indicating exposure time through color change is:
- a container semipermeable to oxygen which contains the aqueous solution therein and at least one breakable capsule that can be broken by means of pressure or bending, comprising therein or in a different capsule, the dye and at least one reducing compound, or
- a container semipermeable to oxygen which contains the dye, at least one reducing compound, and at least one breakable capsule that can be broken by means of pressure or bending, comprising the aqueous solution.

9. The device according to any of claims 1 to 8, wherein the face protection device is selected from a 1-ply surgical mask, 3-ply surgical mask, N95 mask, KN95 mask, KF94 mask, FFP1 mask, FFP2 mask with and without exhalation valve, FFP3 mask with and without exhalation valve.

10. The device according to claim 9, wherein the face protection device is -a 3-ply surgical mask, and wherein the indicator for indicating exposure time through color change comprises a polypropylene container with a surface measuring 3 cm x 2.5 cm, adhered by means of an adhesive on the second face of the mask, and comprising therein 1.5 mg of methylene blue, 0.9 mg of sodium dithionite, and 0.4 ml of an aqueous solution, or 0.4 ml of an aqueous solution which contains 1.5 mg of indigo carmine, 0.6 of sodium dithionite,
or
- an FFP2 mask without exhalation valve, and wherein the indicator for indicating exposure time through color change comprises a polypropylene container with a surface measuring 3 cm x 3 cm, adhered by means of an adhesive on the second face of the mask, and comprising therein 1.9 mg of methylene blue, 1.2 mg of sodium dithionite, and 0.5 ml of an aqueous solution, or 0.5 ml of an aqueous solution which contains 1.9 mg of indigo carmine, 0.8 of sodium dithionite.

11. The device according to any of claims 1 to 10, wherein the indicator further comprises adjacent isolating means surrounding said indicator completely or the device completely, and wherein said means are configured to be eliminated, removed, and/or broken, preferably the hermetic and impermeable isolating means is a nylon bag with a thickness of at least 0.24 mm.

12. A kit **characterized in that** it comprises
i. a hermetic oxygen-impermeable receptacle configured to be eliminated and/or broken, wherein said receptacle is a high-oxygen barrier plastic laminate; and
ii. the protection device with a visual indication system inside the hermetic oxygen-impermeable receptacle comprising
• a face protection device comprising two faces, a first inner face configured to be in contact with the skin of a subject using the face protection device; and a second outer face configured to be in contact with the air; ^{and}
• an indicator for indicating exposure time through color change, **characterized in that** it is adhered by means of a system selected from an adhesive, heat sealing, and ultrasonic sealing, on the second face of the face protection device, and comprising a composition which comprises an aqueous solution consisting of a dye selected from methylene blue, indigo, indigo carmine, and at least one reducing compound selected from sodium dithionite, ascorbic acid, or glucose, the composition being **characterized in that** it contains a mass ratio between the dye and the reducing compound of between 1:0.4 and 1:10.

13. The kit according to claim 12, wherein the high-oxygen barrier plastic laminate hermetic receptacle is a three-layer laminate of PETALOX/OPA/PP, wherein the first layer is PET (polyethylene terephthalate) coated with AlOx (aluminum oxide), the second layer is OPA (nylon polyamide), and the third layer is PP (polypropylene).

14. The kit according to claims 12 or 13, wherein the visual indicator further comprises a solid support substrate comprising the dye and the reducing compound absorbed in the entire volume thereof, wherein said solid is selected from absorbent paper, synthetic fabric, preferably selected from polyester, acrylic or the like; or is natural, preferably selected from cotton, flax, hemp, or the like; non-woven fabric, preferably from polypropylene, PET, cotton, cellulose, or others with similar characteristics; and any other similar absorbent material.

15. The kit according to claims 12 to 14, wherein the receptacle incorporates moisture absorbers and/or oxygen absorbers.
